# EUROPEAN PATENT SPECIFICATION

(11) **EP 3 906 209 B1**
(45) Date of publication and mention of the grant of the patent: **21.02.2024**
(21) Application number: 20713186.3
(22) Date of filing: 05.03.2020
(51) Int. Cl.: B65H 35/00, B29C 63/02, B60J 1/20

(54) **PROTECTING SURFACES AND FRANGIBLE STRUCTURES**
SCHUTZ VON OBERFLÄCHEN UND ZERBRECHLICHEN STRUKTUREN
PROTECTION DE SURFACES ET DE STRUCTURES CASSANTES

(30) Priority: 15.03.2019 GB 201903550
(43) Date of publication of application: 10.11.2021
(73) Proprietor: Packexe (Holdings) Limited, Exeter, Devon EX2 8NY (GB)
(72) Inventor: ORCHARD, Andrew, Exeter Devon EX2 8NY (GB)
(74) Representative: Bryers Intellectual Property Ltd
(86) International application number: PCT/EP2020/055943
(87) International publication number: WO 2020/187598

(56) References cited:
- US-A1- 2007 125 474
- US-A1- 2012 024 467
- US-A1- 2012 305 198

## Description

### Field of the Invention

The present invention relates to the protection of surfaces and frangible structures, in particular to a dispenser for dispensing a protective layer.

### Background of the Invention

A problem faced by rescue workers attending crash scenes involving motor vehicles is that, when attempting to gain access to the interior of a vehicle in which one or more people are trapped, by cutting through part of the vehicle structure, they may cause breakage of one or more windows of the vehicle.

The breaking of a vehicle window can result in shattering of the glass, with the possibility of injuring one or more of the rescue workers, such as firefighters, and/or one or of the people within the vehicle. Furthermore, when faced with a complicated crash scene, the rescue worker may have restricted access to a casualty and only be able to use one hand to attempt extrication.

It is accordingly an object of the present invention to provide an effective answer to the above-described problem.

It is a further object of the present invention to provide an improved form of dispenser.

Patent Publication No. US 2012/305198 A1 discloses an adhesive tape dispenser composed of a main body, a tape roll holder including a rotatable member for installing a tape roll thereto, and a pressing roller mounted to the main body and including a rolling member which is rotatable relative to the main body for rolling the adhesive tape pulled out from the tape roll.

### Summary of the Invention

According to a first aspect there is provided a dispenser for use in applying a protective barrier layer to a surface or structure using single-handed application, the dispenser comprising: an end cap: a spindle portion supported by the end cap and having a free end and a longitudinal axis, the spindle portion for supporting a core onto which a roll of a layer of material is wound for rotation around the longitudinal axis; a hand grip portion; and a roller arrangement comprising a roller mount element and a roller, the roller mount element supported by the end cap and having a free end and a longitudinal axis, the roller mounted to the end cap by the roller mount element and the roller rotatable around the longitudinal axis of the roller mount element; the longitudinal axis of the roller mount element extends parallel to the longitudinal axis of the spindle portion; and an application surface of the roller is resiliently deformable or deflectable for enabling a user to urgingly apply a load to dispensed material as it is being applied to the surface or structure.

In use, material is withdrawn from the protective barrier layer unit and brought into contact with a surface to be protected. With one side of the layer of material placed against the surface to be protected, the dispenser can be moved to roll the roller along the other side of the layer of material as it is being withdrawn from the dispenser and applied to the surface. The material can be pressed against the surface using the roller. The resiliently deformable or deflectable application surface of the roller advantageously serves to allow a user to safely and conveniently urge the material being dispensed against the surface to which the material is to be applied. In addition, the resiliently deformable or deflectable application surface of the roller beneficially serves to facilitate tearing of a row of perforations of the material. The user can tilt the dispenser to pivot the dispenser about the free end of the roller mount element to effect tearing of perforations of a row of perforations of the material.

The dispenser may be used to dispense any suitable type of material onto any type of surface to which that material can be usefully applied. The dispenser may be used to dispense a material that comprises a synthetic and/or a natural material.

The roller may be fabricated from a resiliently compressible material. The roller may be fabricated from a natural or a synthetic rubber material, or a foamed plastic material.

The spindle portion may comprise an inner support member and an outer support member, the inner and outer support members arranged concentrically relative to the longitudinal axis of the spindle portion, and the outer support member rotatable around the inner support member.

The roller arrangement may further comprise a roller support member, the roller support member and the roller mount element arranged concentrically relative to the longitudinal axis of the roller mount element, and the roller support member rotatable around the roller mount element.

The end cap may comprise an outer face and a marginal surface, and the hand grip portion may comprise a recess formed in the outer face and a plurality of ridges formed in the marginal surface. This arrangement provides for a user to gain, and maintain, a comfortable grip on the dispenser.

The end cap may comprise a handle mounting portion. The handle mounting portion may comprise a threaded socket.

According to a second aspect there is provided dispensing apparatus comprising a dispenser according to the first aspect and a protective barrier layer unit, the protective barrier layer unit comprising a core onto which a roll of a layer of material is wound, the roll of a layer of material having a length direction and a transverse direction perpendicular to the length direction, the layer of material having a first side and a second side, and the layer of material being formed with a plurality of rows of perforations extending in the transverse direction and spaced apart in the length direction.

The layer of material may be a plastic film. A side of the plastic film may have an adhesive coating. The adhesive coating may be a solvent-based adhesive, a solvent-based acrylic adhesive, a rubber-based adhesive, or a water-based adhesive.

The layer of material may comprise a paper material.

According to a third aspect there is provided dispensing apparatus according to the second aspect, in which the dispenser of the dispensing apparatus comprises a handle mounting portion, and a handle attachment, the handle attachment having a mounting portion engageable with the handle mounting portion. The handle attachment may be a fixed-length handle attachment or an adjustable length handle attachment.

Use of a dispenser according to the first aspect is in accordance with a fourth aspect.

The dispenser may be used in any suitable application, within any suitable industry. The dispenser may be used in one or more of many different industries, including: automotive, aeronautical, construction, medical, healthcare, hospitality.

The apparatus described herein advantageously facilitates the single-handed rapid application of a protective layer of material to a surface.

A dispenser for use in applying a protective barrier layer to a surface or structure using single-handed application is disclosed. The dispenser comprises a spindle portion and a roller mount element, each supported by an end cap and having a free end. An application surface of a roller rotatable around the roller mount element is resiliently deformable or deflectable for enabling a user to urgingly apply a load to dispensed material as it is being applied to the surface or structure. Dispensing apparatus comprising the dispenser and a roll of a layer of material for dispensing by the dispenser is also disclosed.

Further particular and preferred aspects of the invention are set out in the accompanying dependent claims.

Different features, aspects, examples and embodiments of the invention may be used separately or together.

### Brief Description of the Drawings

The present invention will now be more particularly described, with reference to the accompanying drawings, in which:
**Figure 1** is a perspective view of a dispenser;
**Figure 2** is a further view of the dispenser of **Figure 1****;**
**Figure 3** shows dispensing apparatus comprising the dispenser of **Figure 1** and a protective barrier layer unit;
**Figure 4** shows a cross-sectional view of the dispenser of **Figure 1****;**
**Figure 5** illustrates use of the dispenser of **Figure 1** and the protective barrier layer unit of **Figure 3** to apply a protective material to a surface;
**Figure 6** shows the dispenser of **Figure 1** and the protective barrier layer unit of **Figure 3** assembled for use;
**Figures 7** **&** **8** show dispensing apparatus.

### Description

Illustrative embodiments and examples are described below in sufficient detail to enable those of ordinary skill in the art to embody and implement the apparatus, systems and/or processes described herein. It is to be understood that embodiments and examples can be provided in many alternate forms and the invention should not be construed as limited to the embodiments and examples set forth herein but by the scope of the appended claims.

Unless otherwise defined, all terms (including technical and scientific terms) used herein are to be interpreted as is customary in the art. In addition, features referred to herein in the singular can number one or more, unless the context clearly indicates otherwise. Further, in the following description, all orientational terms, such as upper, lower, radially and axially, are used in relation to the drawings, which are not necessarily drawn to scale, and which, in some instances, may have been exaggerated or simplified for illustrative purposes only, and are intended to facilitate an understanding of the invention rather than to limit the scope of the invention, unless the context clearly indicates otherwise.

The present invention provides a dispenser for use in applying a protective barrier layer to a surface or structure, using single-handed application. The dispenser is usable with a protective barrier layer unit that comprises a core onto which a roll of a layer of material is wound. The present invention provides dispensing apparatus comprising the dispenser and a protective barrier layer unit.

The protective barrier layer may be any suitable material, for example a plastic film, a paper, a fabric or a felt material. The protective barrier layer may comprise only a single layer or may comprise a plurality of constituent layers. A protective barrier layer comprising a plurality of constituent layers may comprise layers of the same material and/or layers of different materials. The protective barrier layer may comprise a layer of a synthetic material and/or a layer of a natural material and/or a layer of a combination of one or more synthetic materials and one or more natural materials. Thus, the protective barrier layer may comprise only a single layer, this being of a synthetic material or a layer of a natural material, or may comprise a plurality of constituent layers, this comprising only layers of a synthetic material, only layers of a natural material, only layers of a combination of one or more synthetic materials and one or more natural materials, or at least two of: a layer of a synthetic material, a layer of a natural material, a layers of a combination of one or more synthetic materials and one or more natural materials. The or each layer may have any suitable thickness. A plurality of constituent layers may comprise all layers of the same thickness, all layers of different thicknesses, or at least two layers of the same thickness and one layer of a different thickness.

### Figures 1 to 6

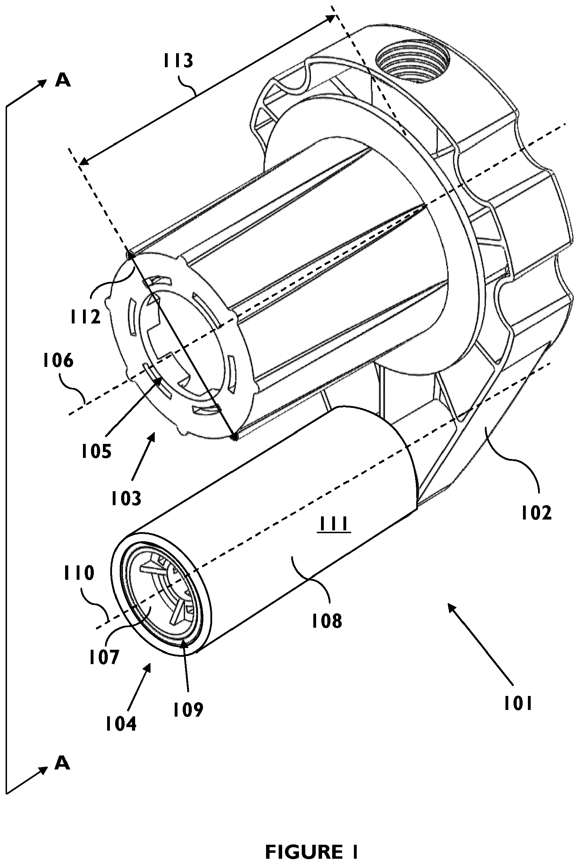

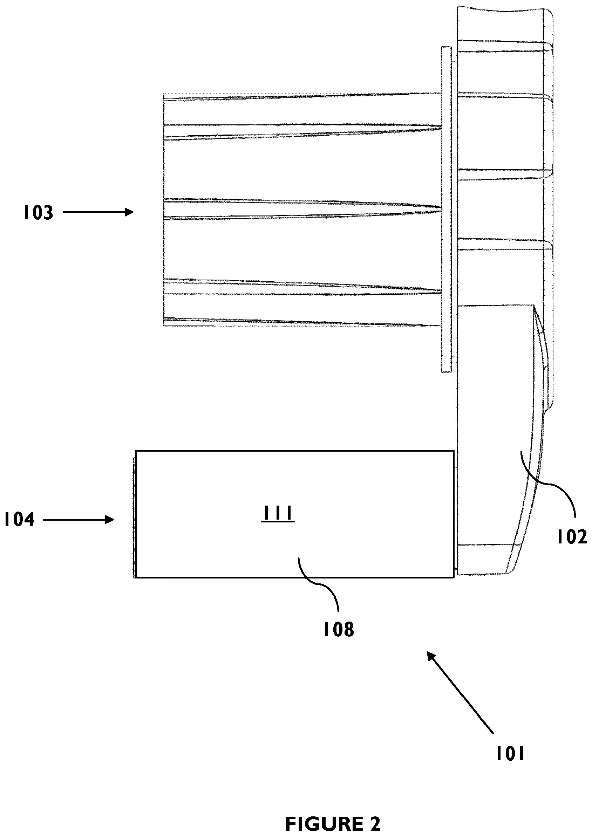

A dispenser 101 will now be described with reference to **Figures 1 to 6****.**

Dispenser 101 is designed to allow a user to apply a protective barrier layer to a surface or structure using a single-hand.

The dispenser 101 comprises an end cap 102, a spindle portion, indicated at 103, a roller arrangement, indicated at 104, and a hand grip portion, indicated at 401. The spindle portion 103 is supported by the end cap 102 and has a free end 105 and a longitudinal axis, indicated at 106. In use, the spindle portion 103 supports a core, onto which a roll of a layer of material is wound, for rotation around the longitudinal axis.

The roller arrangement 104 comprises a roller mount element 107 and a roller 108. The roller mount element 107 is supported by the end cap 102 and has a free end 109 and a longitudinal axis, indicated at 110. The roller 108 is mounted to the end cap 102 by the roller mount element 107, and the roller 108 is rotatable around the longitudinal axis 110 of the roller mount element 107.

The longitudinal axis 110 of the roller mount element 107 extends parallel to the longitudinal axis 106 of the spindle portion 103.

An application surface 111 of the roller is resiliently deformable or deflectable for enabling a user to urgingly apply a load to dispensed material as it is being applied to the surface or structure.

The spindle portion 103 is generally cylindrical, having an external diameter, indicated at 112, and a width 113.

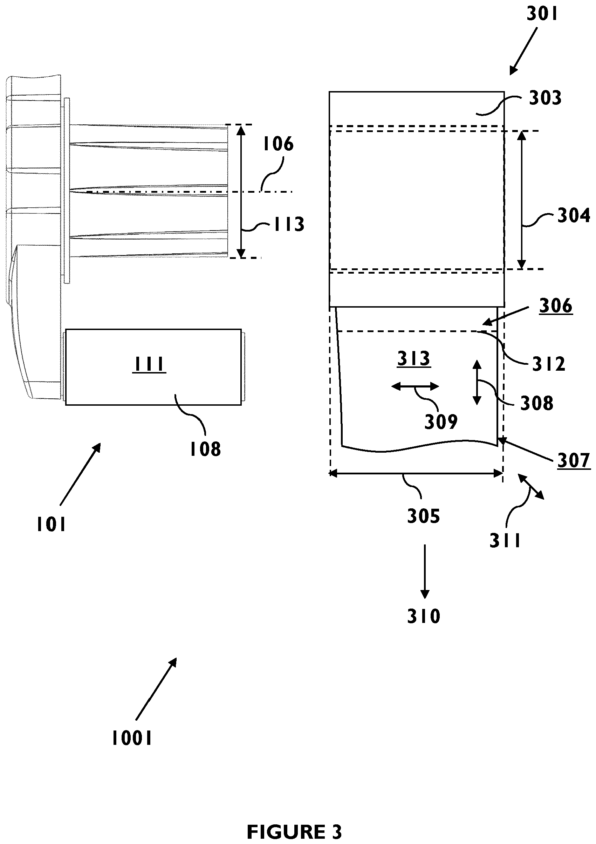

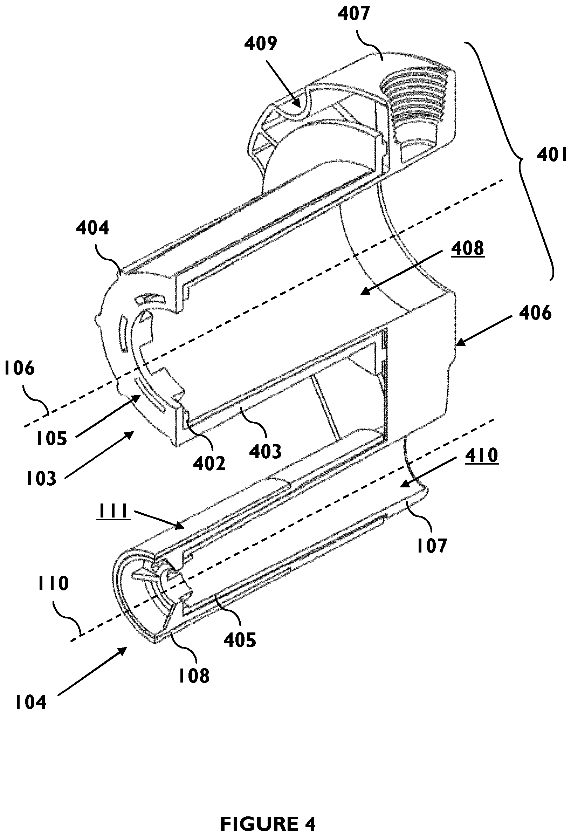

Referring now to **Figures 3** **&** **4****,** the dispenser 101 is usable with a protective barrier layer unit, such as protective barrier layer unit 301. Thus, dispensing apparatus 1001 comprises the dispenser 101 and a protective barrier layer unit, such as protective barrier layer unit 301, comprising a roll of a layer of material 303 for dispensing by the dispenser 101.

Protective barrier layer unit 301 comprises a core 302 onto which a roll of a layer of material 303, is wound. The core 302 is generally cylindrical tubular and elongate, having an internal diameter, indicated at 304, and a width 305.

The protective barrier layer unit 301 and spindle portion 103 are relatively dimensioned such that the core 302 is frictionally retainable upon the spindle portion 103.

According to this illustrated embodiment, the spindle portion 103 comprises an inner support member 402 and an outer support member 403. The inner and outer support members 402, 403 are arranged concentrically relative to the longitudinal axis 106 of the spindle portion 103, with the outer support member 403 rotatable around the inner support member 402.

According to this illustrated embodiment, the external diameter 112 of the spindle portion 103 is determined by the radial dimensions of the outer support member 403 of the spindle portion 103, and the protective barrier layer unit 301 and spindle portion 103 are relatively dimensioned such that the core 302 is frictionally retainable upon the spindle portion 103 in fixed rotation with the outer support member 403.

The external profile of the spindle portion 103 may be designed to facilitate the location of the protective barrier layer unit 301 thereon and the subsequent removal of the protective barrier layer unit 301 therefrom.

For example, the external profile of the spindle portion 103 may be tapered in the direction towards the free end 105, or feature tapering ribs 404, to facilitate insertion of the spindle portion 103 into the core 302 of the protective barrier layer unit 301 and the subsequent withdrawal of the spindle portion 103 from within the core 302 of the protective barrier layer unit 301.

According to this illustrated embodiment, the roller arrangement 104 further comprises a roller support member 405. The roller support member 404 and the roller mount element 107 are arranged concentrically relative to the longitudinal axis I 10 of the roller mount element 107, and the roller support member 405 is rotatable around the roller mount element 107.

According to this illustrated embodiment, the roller 108 is fabricated from a resiliently compressible material. In a specific example, the roller is fabricated from a natural or a synthetic rubber material. In another specific example, the roller is fabricated from a foamed plastic material.

According to the illustrated arrangement, the roller 108, the roller support member 404 and roller mount element 107 are arranged concentrically relative to the longitudinal axis 110 of the roller mount element 107, with the roller support member 405 intermediate the roller 108 and the roller mount element 107. According to this specific embodiment, the roller 108 is fixed in rotation with the roller support member 405. The roller 108 may be retained on the roller support member 405 in any suitable way, for example by way of frictional engagement or the use of adhesive.

According to this specific illustrated example, the roller 108 comprises a single roller element, in the form of a sleeve that provides a homogenous application surface 111.

It is to be appreciated that the roller may have a different construction but the same or similar functionality.

For example, the roller may be formed from a series of roller sub-elements, each providing a respective portion of the application surface. Each of the roller sub-elements may be each independently deformable or deflectable during use of the dispenser. The roller sub-elements may be together or independently radially movable towards and away from the longitudinal axis of the roller mount element. In such an example, the roller sub-elements may be made biased towards an 'at rest', 'unloaded' or 'unstressed' condition by one or more biasing elements, which may be made from a resiliently compressible material or may comprise a spring element, for example a compression spring or leaf spring. In such an example also, the roller sub-elements may be made from a rigid material, with the respective portions of the application surface being deflectable by virtue of radially inward displacement of the roller sub-elements. A series of roller sub-elements may include roller sub-elements that are all the same or that differ in some way, for example in relation to size, shape, resilience, rigidity, appearance.

Referring now to the protective barrier layer unit 301, the layer of material 303 may comprise any suitable material or materials. In an example, the layer of material 303 is a protective barrier film. The layer of material 303 has a first side 306 and a second side 307, the second side 307 opposed to the first side 306. The roll of a layer of material 303 has a length direction 308 and a transverse direction 309 perpendicular to the length direction 308. The unwind direction 310 of the roll of a layer of material 303 is parallel to the length direction 308 of the roll of a layer of material 303. The layer of material 303 has a thickness direction 311, which is perpendicular to the length direction 308 of the roll of a layer of material 303 and to the transverse direction 309 of the roll of a layer of material 303. The layer of material 303 is formed with a plurality of rows of perforations, such as row of perforations 312, extending in the transverse direction 309 of the roll of a layer of material 303 and spaced apart in the length direction 308 of the roll of a layer of material 303. Sheets of the layer of material 303 are defined between successive rows of perforations.

As material 303 is dispensed from the dispenser 101, it can be placed on a surface that requires protection. Dispensed material may be applied to a variety of different items, to cover all or part of that item. It is also to be understood that dispensed material may be applied onto surfaces of different materials, for example, a metal, a plastic, or a fibrous material.

In a specific example, the layer of material 303 is a plastic film. Optionally, the plastic film is clear. This enables the surface on which the plastic film is placed to be viewed through the plastic film. However, it is to be appreciated that a plastic film that is translucent or opaque, rather than transparent, may be used. In addition, a plastic film that is coloured or colour tinted, rather than uncoloured, may be used.

The plastic film may be any suitable plastic film. The plastic film may be a polyethylene film. The plastic film may be a polyolefin film.

Preferably, one side of the layer of material 303, for example second side 307, has an adhesive coating. The adhesive coating may comprise any suitable type of adhesive, for example a solvent-based adhesive, which may be a solvent-based acrylic adhesive, a rubber-based adhesive, or a water-based adhesive. The adhesive may be a pressure-sensitive adhesive. Alternatively, the one side of the layer of material 303 may be provided with a tackifier.

Thus, as material 303 is dispensed from the dispenser 101, it can be placed on a surface that requires protection. and will remain in contact with that surface. More specifically, whereas an adhesive carried by the layer of material 303 can bond dispensed material 303 to a surface to be protected, when brought into contact therewith, a tackifier carried by the layer of material 303 can resist the movement of dispensed material 303 applied to a surface to be protected relative to that surface.

It is to be appreciated that the first side 306 and/or the second side 307 of the layer of material 303 may be provided with any suitable coating, application or treatment. In an example, both sides 306, 307 of the layer of material 303 are provided with a coating, application or treatment, but the coating, application or treatment of the first side 306 differs from the coating, application or treatment of the second side 307.

The layer of material 303 may have any suitable thickness. In an example, the layer of material 303 is a plastic film having a thickness within the range from 40 microns to 100 microns.

The rows of perforations 312 may be spaced apart by any suitable distance. The rows of perforations 312 may be spaced apart by a distance within the range from 50 mm to 600 mm inclusive.

The layer of material 303 may have any suitable width and may have any suitable length. The layer of material 303 may have a width of up to an including 250 mm and a length of up to and including 100 m.

The core 302 may have any suitable dimensions and may be made from any suitable material, for example a plastics material.

According to this illustrated embodiment, the end cap 102 comprises an outer face 406 and a marginal surface 407. According to this specific illustrated example, the marginal surface 407 extends from a periphery of the outer face 406 towards the free ends 105, 109 of the spindle portion 103 and roller mount element 107 respectively. In this specific illustrated example, the hand grip portion 401 of the end cap 102 comprises a recess 408 formed in the outer face 406 and a plurality of ridges, such as ridge 409, formed in the marginal surface 407.

The recess 408 can receive the fingers of a hand of a user gripping the dispenser 101 and the thumb of that hand can be located within a ridge 409.

The hand grip portion 401 is provided to facilitate manual handling of the dispenser 101.

It is to be appreciated that different protective barrier layer units may be used with the dispenser, for example a first protective barrier layer unit having a core onto which a roll of a layer of a first material is wound may be removably mounted on the spindle portion and used to apply the first material to a surface and then the first protective barrier layer unit may be removed from the spindle portion and a second protective barrier layer unit having a core onto which a roll of a layer of a second, different material is wound may be removably mounted on the spindle portion and used to apply the second material to the same or a different surface. By way of further example, one protective barrier layer unit usable with the dispenser may be swapped with another protective barrier layer unit usable with the dispenser to vary, instead of or as well as the type of material, one or more characteristics, dimensions and/or aesthetic qualities of the material, the layer of material and/or sheets of the layer of material.

As can be seen in **Figure 4****,** according to the specific arrangement illustrated, the inner support member 402 of the spindle portion 103 defines a hollow interior region that provides the recess 408. Thus, when a person has placed their fingers of one hand into the recess and is using the dispenser 101 to apply material from a protective barrier layer unit 301, the core 302 of the protective barrier layer unit 301 rotates around the fingers located within the recess 408 of the hand grip portion 401. This improves the stability of the dispenser 101 during single-handed operation.

It is to be understood that the dispenser 101 can be operated single-handedly using either a left hand or a right hand.

It is to be appreciated that the hand grip portion 401 may have any suitable alternative arrangement.

The end cap 102 may have any suitable dimensions and may be made from any suitable material, for example a plastics material.

According to this illustrated example, the roller mount element 107 of the roller arrangement 104 also defines a hollow interior region 410. Such a hollow interior region advantageously serves to reduce the amount of material in the end cap 102, which in turn reduces the weight of the dispenser, which is beneficially for controlled handling. A reduction in the material volume is environmentally beneficial, serves to reduce the cost of manufacture, and the weight reduction additionally serves to reduce the cost of transportation.

According to the specific illustrated example, the inner support member 402 of the spindle portion 103 and the roller mount element 107 of the roller arrangement 104 may be formed integral with the end cap 102, for example by a plastics moulding process.

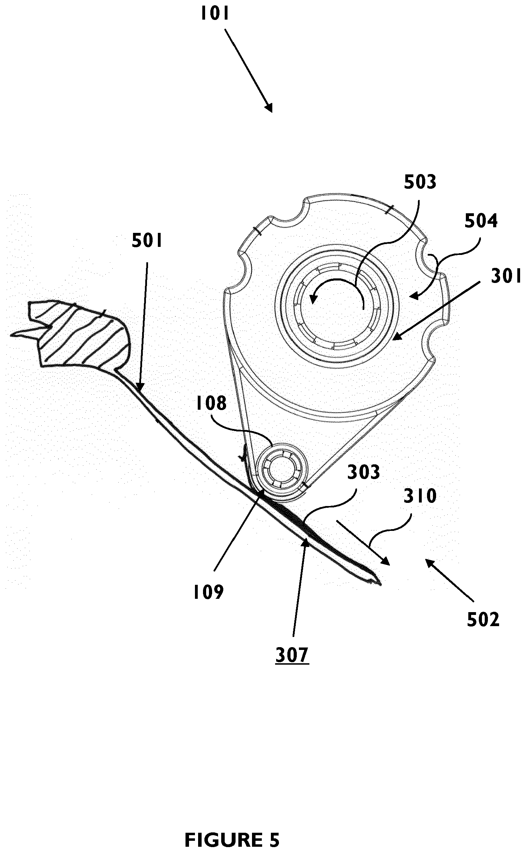

**Figure 5** illustrates an example scenario in which material 303 is being withdrawn from the dispenser 101 and applied to a surface 501.

According to the illustrated example scenario, the material 303 is a plastic film, the second side 307 of which is provided with an adhesive, and the surface 501 is glass of a vehicle.

Initially, material 303 is withdrawn from the protective barrier layer unit 301, in the withdrawal direction 3 10, over the roller 108, and brought into contact with the surface 501. In this example scenario, the second side 307 of the material 303 is pressed against the surface 501 using the roller 108. The dispenser 101 is then movable in a direction indicated by arrow 502, opposite the withdrawal direction 310, to apply the material 303 over the surface 501. Under this action, the protective barrier layer unit 301 and the roller 108 rotate in the direction indicated by arrow 503. In this example illustrated scenario, the first side 306 of the layer of material 303 faces towards the roller 108 and the second side 307 of the layer of material 303 faces away from the roller 108; with the second side 307 of the layer of material 303 in contact with the surface 501, the dispenser 101 is movable in the direction 502 to roll the roller 108 along the first side 306 of the layer of material 303.

The resiliently deformable or deflectable application surface 111 of the roller 108 advantageously serves to allow a user to safely and conveniently urge the material 303 being dispensed against the surface 501 to which the material 303 is to be applied.

In addition, the resiliently deformable or deflectable application surface I I I of the roller 108 beneficially serves to facilitate tearing of a row of perforations 312 of the material 303. The user can tilt the dispenser 101 in the direction indicated by arrow 504, to pivot the dispenser 101 about the free end 109 of the roller mount element 107. In doing so, with the material 303 held on the surface 501, by virtue of the adhesive of the second side 507, and with the application surface I I I of the roller 108 being resiliently deformable or deflectable, sufficient force can be applied to the material 303 to cause rupturing of a row of perforations 312.

It is to be appreciated that the depending on how the application surface I I I of the roller 108 is provided, deformation and/or deflection thereof in response to being subjected to loading may occur in a region local to the area of an applied force or may occur across a greater region. In some examples, deformation and/or deflection of the application surface I I I may occur substantially entirely thereacross, in the longitudinal direction of the roller 108. In some examples, the application surface I I I may feature a plurality of distinct portions in each of which deformation and/or deflection can occur without influencing any other of the distinct portions. In some examples, the degree of deformation and/or deflection of the application surface 111 of the roller 108 is proportional to the load applied thereon.

Strips of the layer of material 303 can be applied to the surface 501 in any suitable distribution pattern, for example strips arranged substantially side-by-side or overlapping to a significant extent.

In the present example scenario, the surface 501 is glass, and in the case of such a surface that is fragile or brittle, and can thus break or shatter, in the event of surface breakage, the adhesive carried by of the plastic film constituting the layer of material 303 serves to retain dangerous shards thereon and hence reduce the hazard posed to persons in the immediate vicinity.

It is to be appreciated that the dispenser described herein may be used in many different scenarios and applications, and may be used to apply a protective barrier layer to glass, carpet and hard floors, or any of a wide variety of surfaces, for example, wood, ceramic, stone, brick, metal. The dispenser is particularly suitable for precision application of a protective barrier film against edges, for example skirting boards, and in corners. The dispenser may be used in many different industries, including: automotive, aeronautical, construction, medical, hospitality.

In a specific example, the dispenser is designed to be relatively compact and used with protective barrier layer units comprising a core having a width of 100 mm and a roll length of 75 m.

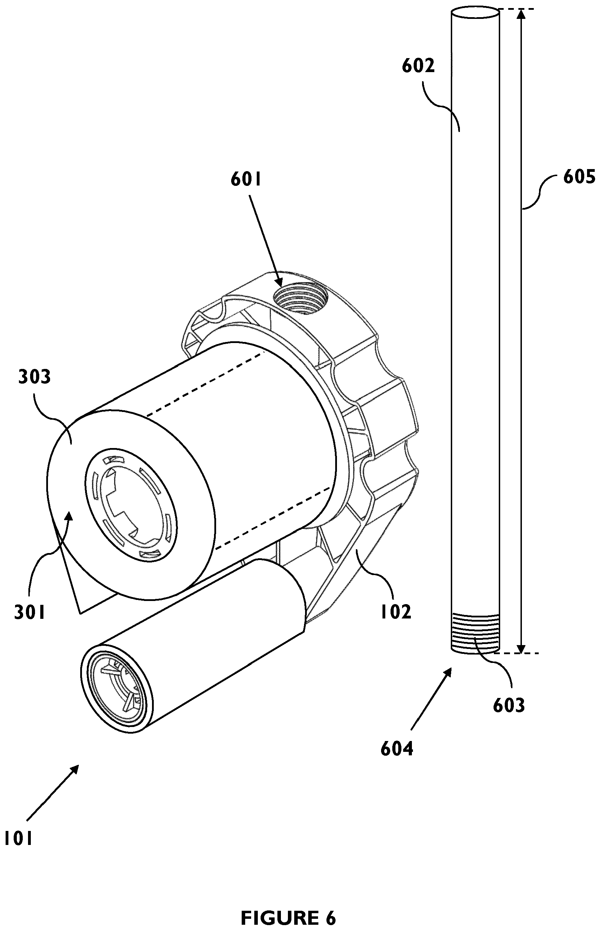

Referring now to **Figure 6****,** although the dispenser 101 is designed for single-handed operation, according to the present embodiment, the end cap 102 comprises a handle mounting portion 601 for enabling a handle attachment, such as handle attachment 602 to be mounted to the end cap 102. The mounting of a handle to the dispenser 602 allows a user to apply protective material to a surface that is otherwise out of reach, or to apply protective material to a surface more comfortably.

According to this specific illustrated example, the handle mounting portion 601 comprises a threaded socket, and handle 602 comprises a threaded mounting portion 603 at one end 604 thereof allowing the handle to be releasably engaged with the end cap 102 by a screw-fit action.

It is to be appreciated that the handle mounting portion 601 may comprise any other suitable fixing arrangement allowing a handle attachment to be mounted to the end cap 102. For example, the handle mounting portion may comprise one part of a two-part fitting, with the handle attachment being provided with the other part, or the handle mounting portion may comprise a clamp that does not require a specific complementary component to be presented by the handle attachment.

The handle attachment 602 has a length 605. According to this specific illustrated example, the handle attachment 602 is a fixed-length handle attachment. Such a handle attachment may have any suitable length. It is to be appreciated that a handle attachment usable with the dispenser 101 may alternatively be an adjustable-length handle attachment. Such a handle attachment may have any suitable range of available selectable lengths. In a specific example, a handle attachment usable with the dispenser 101 has a telescopically adjustable length.

The handle attachment 602 may be made from any suitable material, for example a plastics material.

### Figures 7 & 8

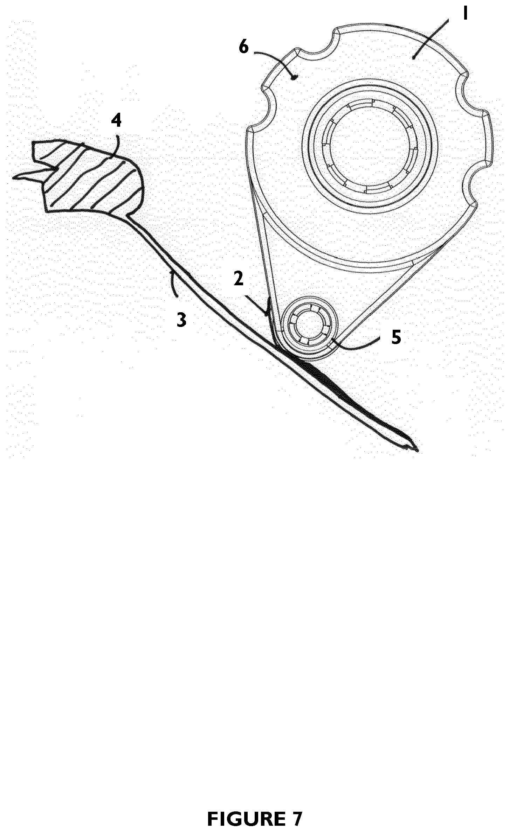

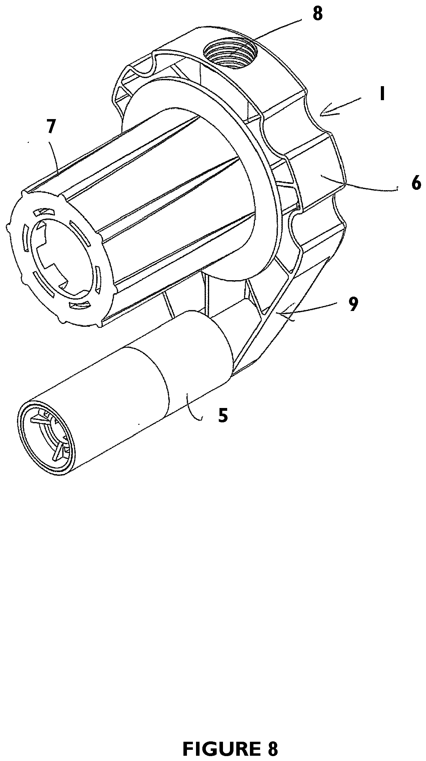

Dispensing apparatus comprising a dispenser and a roll of a plastic film wound onto a core will now be described with reference to **Figure 7****,** which is a schematic sectional side view showing the application of a plastic film to a vehicle window, and **Figure 8****,** which is a perspective view of a dispenser.

According to the dispensing apparatus, there is provided a dispenser for use in protecting or laminating a surface or structure using single-handed application, the dispenser comprising a core supported by an end cap and a cylindrical roll of plastic film wound onto the core with one side of the film having an adhesive coating, for example, one afforded by a solvent-based acrylic adhesive, the plastic film being formed with a plurality of spaced transversely extending rows of perforations, and a resilient roller mounted on the end cap and extending parallel to the axis of rotation of the end cap enabling the user to apply a resilient load to the plastic film as it is being applied to the surface or structure.

The adhesive coating may alternatively be a rubber-based adhesive.

The resilient roller is preferably in the form of a cylinder of foamed plastic material supported by a central rod that extends from the single end cap. The single end cap preferably contains ergonomically moulded ridges that provide hand grips to enable secure holding of the dispenser during rapid application of the film.

A handle can be attached to the end cap to allow telescopic extension of the dispenser for the application of the film.

The plastic film is preferably low-density polyethylene film having a thickness within the range of from 40-100 microns, typically between 40 and 50 microns.

The rows of perforations may be spaced apart by a distance within the range of from 75 to 150 mm or, in some cases, up to 250 mm.

The resilient roller can be 4', 6' or 8' in length.

The dispenser shown in **Figures 7** **&** **8** comprises a single end cap I on which a core 7 is rotatably mounted with a roll of low density polyethylene film 2 (shown in **Figure 7**) wound onto the core 7. The polyethylene film 2 has an average thickness of the order of 55 microns, a longitudinal tensile strength in excess of daN/cm and a transverse strength in excess of I daN/cm.

The polyethylene film 2 is a clear film which is provided on one side with a solvent-based acrylic adhesive so that, as the film 2 is withdrawn from the roll, it can be placed on a surface that requires protection and will remain in contact with that surface. The adhesion to steel is of the order of 330 cN/cm.

The end cap I is formed with ergonomically moulded hand grips 6 to enable a secure hold during singlehanded usage. The end cap I contains a threaded socket 8 to allow a telescopic handle (not shown) to be screwed in for ranged application of the film 2. A single resilient roller 5 in the form of a cylinder of foamed plastic material is supported on a rod extending from a portion 9 of the end cap 6.

The resilient roller 5 is spaced from the surface of the polyethylene film 2, wound onto the core 7 and used to assist in placing the film 2 in the required position and urging it resiliently into contact with the surface to be protected. The film 2 is highly static and this ensures that the non-adhesive side of the film 2 sticks to the roller 5.

The polyethylene film 2 is formed with transversely extending rows of perforations and, when a sufficient length of the polyethylene film 2 has been withdrawn from the roll, the film 2 is ruptured by tearing along a selected row of perforations. The provision of the resilient roller 5 facilitates tearing. The rows of perforations extend fully across the film and are typically uniformly spaced by a distance of the order of 100 mms. The spacing may alternatively be 50 mms, but could be as much as 150 mms. This close spacing of the rows of perforations makes tearing easier, enabling an accurate tear to be made without the need for separate cutting tool and avoiding wastage of the film 2.

**Figure 7** shows the application of a strip of film 2 to a window or windscreen 3 of a vehicle having a solid frame 4 so as to cover the frangible part of the vehicle. A number of strips of film will normally be applied, starting from a position either above or below the window. The whole of the window or windscreen 3 will be covered with a degree of overlap onto the vehicle frame 4.

The film 2 adheres securely to the surfaces to which it is applied. This ensures that, if the window or windscreen 3 should break as a result of an attempt being made to the interior of the vehicle, the broken glass will remain adhered to the plastic film 2 and not injure the rescue worker or the people within the vehicle.

The technical data for the film may be as follows:

| Film Type | Low Density Polyethylene |
|---|---|
| Average Thickness | 55 Microns |
| Colour | Clear with colour coded logo to match surface of intended use |
| Adhesive Type | Acrylic Solvent Based |
| Adhesion to Steel | 330 cN/cm |
| Longitudinal Tensile Strength | > 1 daN/cm |
| Transverse Tensile Strength | >0.7 daN/cm |

Although specific reference has been made above to the application of the adhesive coated film to a vehicle window or windscreen, it is to be appreciated that the invention is applicable to the protection of surfaces or structures generally, for example, floors, carpets and glass objects. For example, a film can be provided for protecting a carpet within a car or a car door frame when work is being carried out on a car in garage. A film with a rubber-based adhesive can also be used to protect firemen from sharp objects or for protecting metal objects used in the aero industry.

Another film that can be used is a clear yellow polyolefin film having a thickness of 100 microns with the rows of perforations spaced apart by a distance between 50 mm and 250 mm. A rubber adhesive can be used giving adhesion to steel of 115 cN/cm, a transverse tensile strength of at least 1.2 daN/cm and a longitudinal tensile strength of at least 1.4 daN/cm.

It is to be appreciated that the dispenser may be used to dispense any suitable layer of material. Thus, the dispenser may be used to dispenser a layer of a material that is not a plastic film, as featured in the above-described example, but that is, for example, a paper material, or a fleece material.

As previously indicated, it is envisaged that a dispenser as described herein can be provided for use with each of a plurality of protective barrier layer units as described herein. For example, when all the material of one protective barrier layer unit has been dispensed, it can be replaced with another protective barrier layer unit that carries material for dispensing. Thus, a protective barrier layer unit may be substituted for a like protective barrier layer unit. However, a protective barrier layer unit may be substituted for a different protective barrier layer unit, which may carry a material that differs in one or more ways. It is also envisaged that a core of protective barrier layer unit from which all the material has been dispensed may be refilled, by a new roll of a layer of material being wound thereon.

Although illustrative embodiments and examples of the invention have been disclosed in detail herein, with reference to the accompanying drawings, it is to be understood that the invention is not limited to the precise embodiment and examples shown and/or described and that various changes and modifications can be effected therein by one skilled in the art without departing from the scope of the invention as defined by the appended claims.

## Claims

1. A dispenser (101) for use in applying a protective barrier layer to a surface or structure using single-handed application, the dispenser (101) comprising:
an end cap (102):
a spindle portion (103) supported by the end cap (102) and having a free end (105) and a longitudinal axis (106), the spindle portion (103) for supporting a core onto which a roll of a layer of material (303) is wound for rotation around the longitudinal axis (106);
a hand grip portion (601); and
a roller arrangement (104) comprising a roller mount element (107) and a roller (108), the roller mount element (107) supported by the end cap (102) and having a longitudinal axis (110), the roller (108) mounted to the end cap (102) by the roller mount element (107) and the roller (108) rotatable around the longitudinal axis (110) of the roller mount element (107), the longitudinal axis (110) of the roller mount element (107) extending parallel to the longitudinal axis (106) of the spindle portion (103); **characterised in that**:
the roller mount element (107) has a free end (109), and
an application surface (III) of the roller (108) is resiliently deformable or deflectable for enabling a user to urgingly apply a load to dispensed material as it is being applied to the surface or structure.

2. A dispenser (101) as claimed in claim 1, wherein the roller (108) is fabricated from a resiliently compressible material.

3. A dispenser (101) as claimed in claim 2, wherein the roller (108) is fabricated from one of: a natural or a synthetic rubber material, a foamed plastic material.

4. A dispenser (101) as claimed in any of claims I to 3, wherein the spindle portion (103) comprises an inner support member (402) and an outer support member (403), the inner and outer support members (402, 403) arranged concentrically relative to the longitudinal axis (106) of the spindle portion (103), and the outer support member (403) rotatable around the inner support member (402).

5. A dispenser (101) as claimed in any of claims I to 4, wherein the roller arrangement (104) further comprises a roller support member (405), the roller support member (405) and the roller mount element (107) arranged concentrically relative to the longitudinal axis (110) of the roller mount element (107), and the roller support member (405) rotatable around the roller mount element (107).

6. A dispenser (101) as claimed in any of claims I to 5, wherein the end cap (102) comprises an outer face (406) and a marginal surface (407), and the hand grip portion (401) comprises a recess (408) formed in the outer face (406) and a plurality of ridges (409) formed in the marginal surface (407).

7. A dispenser (101) as claimed in any of claims I to 6, wherein the end cap (103) comprises a handle mounting portion (601).

8. A dispenser (101) as claimed in claim 7, wherein the handle mounting portion (601) comprises a threaded socket.

9. Dispensing apparatus comprising the dispenser (101) of any of claims I to 8 and a protective barrier layer unit (301), the protective barrier layer unit (301) comprising a core (302) onto which a roll of a layer of material (303) is wound, the roll of a layer of material (303) having a length direction (308) and a transverse direction (309) perpendicular to the length direction (308), the layer of material (303) having a first side (306) and a second side (307), and the layer of material (303) being formed with a plurality of rows of perforations (312) extending in the transverse direction (309) and spaced apart in the length direction (308).

10. Dispensing apparatus as claimed in claim 9, wherein the layer of material (303) is a plastic film.

11. Dispensing apparatus as claimed in claim 9, wherein one of the first side (306) and the second side (307) of the plastic film has an adhesive coating.

12. Dispensing apparatus as claimed in claim 11, wherein the adhesive coating is provided by one of: a solvent-based adhesive, a solvent-based acrylic adhesive, a rubber-based adhesive, a water-based adhesive.

13. Dispensing apparatus as claimed in claim 9, wherein the layer of material (303) comprises a paper material.

14. Dispensing apparatus comprising the dispenser (101) of claim 7 or claim 8, and a handle attachment (602), the handle attachment (602) having a mounting portion (603) engageable with the handle mounting portion (601), and the handle attachment (602) being one of: a fixed-length handle attachment, an adjustable length handle attachment.

15. Use of a dispenser (101) as claimed in any of claims I to 8.

## Patentansprüche

1. Ein Spender (101) zur Verwendung beim Aufbringen einer schützenden Barriereschicht auf eine Oberfläche oder Struktur durch einhändiges Aufbringen, wobei der Spender (101) aufweist:
eine Endkappe (102):
einen Spindelabschnitt (103), der von der Endkappe (102) getragen wird und ein freies Ende (105) und eine Längsachse (106) aufweist, wobei der Spindelabschnitt (103) zum Tragen eines Kerns dient, auf den eine Rolle einer Materialschicht (303) zur Drehung um die Längsachse (106) gewickelt ist;
einen Handgriffabschnitt (601); und
eine Rollenanordnung (104), die ein Rollenhalteelement (107) und eine Rolle (108) aufweist, wobei das Rollenhalteelement (107) von der Endkappe (102) getragen wird und eine Längsachse (110) aufweist, wobei die Rolle (108) durch das Rollenhalteelement (107) an der Endkappe (102) angebracht ist und die Rolle (108) um die Längsachse (110) des Rollenhalteelements (107) drehbar ist, wobei sich die Längsachse (110) des Rollenhalteelements (107) parallel zur Längsachse (106) des Spindelabschnitts (103) erstreckt; **dadurch gekennzeichnet, dass**:
das Rollenhalteelement (107) ein freies Ende (109)\ aufweist, und
eine Aufbringungsfläche (111) der Rolle (108) elastisch verformbar oder auslenkbar ist, um es einem Benutzer zu ermöglichen, Druck auf das abgegebene Material auszuüben, während es auf die Oberfläche oder Struktur aufgebracht wird.

2. Ein Spender (101) nach Anspruch 1, wobei die Rolle (108) aus einem elastisch komprimierbaren Material hergestellt ist.

3. Ein Spender (101) nach Anspruch 2, wobei die Rolle (108) aus einem der folgenden Materialien hergestellt ist: einem natürlichen oder synthetischen Gummimaterial, einem geschäumten Kunststoffmaterial.

4. Ein Spender (101) nach einem der Ansprüche 1 bis 3, wobei der Spindelabschnitt (103) ein inneres Stützelement (402) und ein äußeres Stützelement (403) aufweist, wobei das innere und das äußere Stützelement (402, 403) konzentrisch zur Längsachse (106) des Spindelabschnitts (103) angeordnet sind, und wobei das äußere Stützelement (403) um das innere Stützelement (402) drehbar ist.

5. Ein Spender (101) nach einem der Ansprüche 1 bis 4, wobei die Rollenanordnung (104) ferner ein Rollenstützelement (405) aufweist, wobei das Rollenstützelement (405) und das Rollenhalteelement (107) konzentrisch relativ zur Längsachse (110) des Rollenhalteelements (107) angeordnet sind und das Rollenstützelement (405) um das Rollenhalteelement (107) drehbar ist.

6. Ein Spender (101) nach einem der Ansprüche 1 bis 5, wobei die Endkappe (102) eine Außenfläche (406) und eine Randfläche (407) aufweist und der Handgriffabschnitt (401) eine in der Außenfläche (406) ausgebildete Aussparung (408) und eine Vielzahl von in der Randfläche (407) ausgebildeten Rippen (409) aufweist.

7. Ein Spender (101) nach einem der Ansprüche 1 bis 6, wobei die Endkappe (103) einen Griffhalteabschnitt (601) aufweist.

8. Ein Spender (101) nach Anspruch 7, wobei der Griffhalteabschnitt (601) eine Gewindemuffe aufweist.

9. Spendevorrichtung, aufweisend den Spender (101) nach einem der Ansprüche 1 bis 8 und eine Schutzbarriereschichteinheit (301), wobei die Schutzbarriereschichteinheit (301) einen Kern (302) aufweist, auf den eine Rolle einer Materialschicht (303) gewickelt ist, wobei die Rolle einer Materialschicht (303) eine Längsrichtung (308) und eine Querrichtung (309) senkrecht zu der Längsrichtung (308) aufweist, die Materialschicht (303) eine erste Seite (306) und eine zweite Seite (307) aufweist, und die Materialschicht (303) mit einer Vielzahl von Reihen von Perforationen (312) ausgebildet ist, die sich in der Querrichtung (309) erstrecken und in der Längsrichtung (308) beabstandet sind.

10. Spendevorrichtung nach Anspruch 9, wobei die Materialschicht (303) eine Kunststofffolie ist.

11. Spendevorrichtung nach Anspruch 9, wobei eine der ersten Seite (306) und der zweiten Seite (307) der Kunststofffolie eine Klebebeschichtung aufweist.

12. Spendevorrichtung nach Anspruch 11, wobei die Klebebeschichtung durch einen der folgenden Klebstoffe bereitgestellt wird: einen Klebstoff auf Lösungsmittelbasis, einen Acrylklebstoff auf Lösungsmittelbasis, einen Klebstoff auf Gummibasis, einen Klebstoff auf Wasserbasis.

13. Spendevorrichtung nach Anspruch 9, wobei die Materialschicht (303) ein Papiermaterial aufweist.

14. Spendevorrichtung, die den Spender (101) nach Anspruch 7 oder 8 und eine Griffbefestigung (602) aufweist, wobei die Griffbefestigung (602) einen Haltesabschnitt (603) aufweist, der mit dem Griffhalteabschnitt (601) in Eingriff gebracht werden kann, und wobei die Griffbefestigung (602) eine der folgenden ist: eine Griffbefestigung mit fester Länge, eine Griffbefestigung mit einstellbarer Länge.

15. Verwendung eines Spenders (101) nach einem der Ansprüche 1 bis 8.

## Revendications

1. Distributeur (101) destiné à être utilisé pour appliquer une couche barrière protectrice sur une surface ou une structure en utilisant une application d'une seule main, le distributeur (101) comprenant :
un capuchon d'extrémité (102) :
une partie formant broche (103) supportée par le capuchon d'extrémité (102) et ayant une extrémité libre (105) et un axe longitudinal (106), la partie formant broche (103) étant destinée à supporter un noyau sur lequel un rouleau d'une couche de matériau (303) est enroulé pour rotation autour de l'axe longitudinal (106) ;
une partie formant poignée (601) ; et
un agencement de rouleau (104) comprenant un élément de montage de rouleau (107) et un rouleau (108), l'élément de montage de rouleau (107) étant supporté par le capuchon d'extrémité (102) et ayant un axe longitudinal (110), le rouleau (108) étant monté sur le capuchon d'extrémité (102) par l'élément de montage de rouleau (107) et le rouleau (108) étant rotatif autour de l'axe longitudinal (110) de l'élément de montage de rouleau (107), l'axe longitudinal (110) de l'élément de montage de rouleau (107) s'étendant parallèlement à l'axe longitudinal (106) de la partie formant broche (103) ; **caractérisé en ce que** :
l'élément de montage de rouleau (107) a une extrémité libre (109), et une surface d'application (111) du rouleau (108) est déformable ou fléchie de manière élastique pour permettre à un utilisateur d'appliquer de façon à faire pression une charge sur le matériau distribué pendant qu'il est en cours d'être appliqué à la surface ou à la structure.

2. Distributeur (101) selon la revendication 1, dans lequel le rouleau (108) est fabriqué à partir d'un matériau élastiquement compressible.

3. Distributeur (101) selon la revendication 2, dans lequel le rouleau (108) est fabriqué à partir d'un matériau parmi : un matériau en caoutchouc naturel ou synthétique, ou un matériau plastique expansé.

4. Distributeur (101) selon l'une quelconque des revendications 1 à 3, dans lequel la partie formant broche (103) comprend un élément de support interne (402) et un élément de support externe (403), les éléments de support interne et externe (402, 403) étant disposés de manière concentrique par rapport à l'axe longitudinal (106) de la partie formant broche (103), et l'élément de support externe (403) étant rotatif autour de l'élément de support interne (402).

5. Distributeur (101) selon l'une quelconque des revendications 1 à 4, dans lequel l'agencement de rouleau (104) comprend en outre un élément de support de rouleau (405), l'élément de support de rouleau (405) et l'élément de montage de rouleau (107) est disposés concentriquement par rapport à l'axe longitudinal (110) de l'élément de montage de rouleau (107), et l'élément de support de rouleau (405) pouvant tourner autour de l'élément de montage de rouleau (107).

6. Distributeur (101) selon l'une quelconque des revendications 1 à 5, dans lequel le capuchon d'extrémité (102) comprend une face externe (406) et une surface marginale (407), et la partie de poignée (401) comprend un évidement (408) formé dans la face externe (406) et une pluralité de crêtes (409) formées dans la surface marginale (407).

7. Distributeur (101) selon l'une quelconque des revendications 1 à 6, dans lequel le capuchon d'extrémité (102) comprend une partie de montage de poignée (601).

8. Distributeur (101) selon la revendication 7, dans lequel la partie de montage de poignée (601) comprend une douille filetée.

9. Appareil de distribution comprenant le distributeur (101) selon l'une quelconque des revendications 1 à 8 et une unité pour une couche barrière de protection (301), l'unité pour une couche barrière de protection (301) comprenant un noyau (302) sur lequel un rouleau d'une couche de matériau (303) est enroulé, le rouleau d'une couche de matériau (303) ayant une direction longitudinale (308) et une direction transversale (309) perpendiculaire à la direction longitudinale (308), la couche de matériau (303) ayant un premier côté (306) et un second côté (307), et la couche de matériau (303) étant formé avec une pluralité de rangées de perforations (312) s'étendant dans la direction transversale (309) et espacées dans la direction de la longueur (308).

10. Appareil de distribution selon la revendication 9, dans lequel la couche de matériau (303) est un film plastique.

11. Appareil de distribution selon la revendication 9, dans lequel l'un parmi le premier côté (306) et le second côté (307) du film plastique comporte un revêtement adhésif.

12. Appareil de distribution selon la revendication 11, dans lequel le revêtement adhésif est fourni par l'un des éléments suivants : un adhésif à base de solvant, un adhésif acrylique à base de solvant, un adhésif à base de caoutchouc, un adhésif à base d'eau.

13. Appareil de distribution selon la revendication 9, dans lequel la couche de matériau (303) comprend un matériau en papier.

14. Appareil de distribution comprenant le distributeur (101) selon la revendication 7 ou la revendication 8, et un accessoire de poignée (602), l'accessoire de poignée (602) ayant une partie de montage (603) pouvant venir en prise avec la partie de montage de poignée (601), et l'accessoire de poignée (602) étant l'un des éléments suivants : un accessoire de poignée de longueur fixe, une fixation de poignée de longueur réglable.

15. Utilisation d'un distributeur (101) selon l'une quelconque des revendications 1 à 8.
